# EUROPÄISCHE PATENTSCHRIFT

(11) **EP 1 395 846 B1**
(45) Veröffentlichungstag und Bekanntmachung des Hinweises auf die Patenterteilung: **29.12.2004**
(21) Anmeldenummer: 02719671.6
(22) Anmeldetag: 06.03.2002
(51) Int. Cl.: G01S 7/40

(54) **VERFAHREN UND VORRICHTUNG ZUR SELBSTKALIBRIERUNG EINER RADARSENSORANORDNUNG**
METHOD AND DEVICE FOR SELF-CALIBRATION OF A RADAR SENSOR ARRANGEMENT
PROCEDE ET DISPOSITIF POUR L'AUTO-ETALONNAGE D'UN ENSEMBLE DE CAPTEURS RADAR

(30) Priorität: 22.05.2001 DE 10124909
(43) Veröffentlichungstag der Anmeldung: 10.03.2004
(73) Patentinhaber: ROBERT BOSCH GMBH, 70442 Stuttgart (DE)
(72) Erfinder: SCHLICK, Michael, 96372 Pfinztal (DE); HOETZEL, Juergen, 61197 Florstadt (DE); MORITZ, Rainer, 70794 Filderstadt (DE); LUCAS, Bernhard, 74354 Besigheim (DE); TOENNESEN, Tore, 72760 Reutlingen (DE); WINNER, Hermann, 76467 Bietigheim (DE); UHLER, Werner, 76646 Bruchsal (DE); SCHMID, Dirk, 75397 Besigheim (DE)
(86) Internationale Anmeldenummer: PCT/DE2002/000812
(87) Internationale Veröffentlichungsnummer: WO 2002/095443

(56) Entgegenhaltungen:
- EP-A- 0 928 428
- EP-A- 1 058 126
- DE-A- 10 049 906

## Beschreibung

### Stand der Technik

Die Erfindung betrifft ein Verfahren und eine Vorrichtung zum Betrieb einer Radarsensoranordnung, z.B. ein Puls-Echo-Radar oder ein Radarsystem mit eine sog. Binary Phase Shift Key (BPSK) oder einer Pseudo Noise (p/n) Codierung, insbesondere zur Kalibrierung einer aus mehreren Einzelsensoren bestehenden Anordnung nach den gattungsgemäßen Merkmalen des Hauptanspruchs.

Aus der EP-A-1058126 ist ein Verfahren zum Betrieb einer Radarsensoranordnung mit einer Anzahl benachbarter Einzelsensoren zur Bestimmung der Position eines Zielobjekts bekannt. Dort werden in einem Messzyklus sowohl Direktechos als auch Kreuzechos ausgewertet.

Die EP-A-0928428 betrifft ein Verfahren zur Bewertung der Qualität von Entfernungsmessungen und der zugehörigen Messsensoren ohne Verwendung von Referenzmodellen. Die Messqualität eines Messsensors wird danach bewertet je mehr andere Sensoren seine Charakterisierung bestätigen.

Es ist beispielsweise aus der DE 44 42 189 A1 bekannt, dass bei einem System zur Abstandsmessung im Umgebungsbereich von Kraftfahrzeugen Sensoren mit Sende- und Empfangseinheiten zugleich zum Senden und Empfangen von Informationen verwendet werden. Unter Zuhilfenahme der Abstandsmessung können hier passive Schutzmaßnahmen für das Fahrzeug, beispielsweise bei einem Front-, Seiten- oder Heckaufprall aktiviert werden. Mit einem Austausch der erfassten Informationen kann zum Beispiel eine Beurteilung von Verkehrssituationen zur Aktivierung entsprechender Auslösesysteme durchgeführt werden.

Für die sichere Ansteuerung der zuvor erwähnten Insassenschutzsysteme in einem Kraftfahrzeug werden in der Regel eine Vielzahl von Radarsensoren für die einzelnen Konfliktsituationen im Umgebungsbereich des Kraftfahrzeuges benötigt. Die Erfassung bzw. Überwachung der Verkehrssituation, insbesondere im Nahbereich des Fahrzeugs mit Reichweiten von ca. 10 m, kann darüber hinaus auch für eine Vielzahl weiterer Anwendungen nutzbringend sein. Hierzu zählen Einparkhilfen, Hilfen zur Überwachung des sog. "toten Winkels" sowie eine Unterstützung des sog. "Stop & Go"-Verkehrs, bei dem der Abstand zum vorausfahrenden Fahrzeug ermittelt wird um automatisch anhalten und anfahren zu können. Hierbei werden üblicherweise eine Vielzahl von Radarsensoren mit jeweils an die Messaufgabe angepassten unterschiedlichen Anforderungen verwendet.

Jeder einzelne Radarsensor kann aufgrund der weitwinkligen Richtcharakteristik und somit fehlenden Winkelauflösung dabei nur den eindimensionalen radialen Abstand von Objekten zum Sensor bestimmen, nicht aber die zweidimensionale Lage der Objekte in der Ebene der Fahrzeugbewegung. Es ist daher notwendig, diese Radarsensoren in Gruppen einzusetzen, um mit einer sogenannten Radar-Triangulation die Objektpositionen in der Fahrebene zu bestimmen. Bei einer sogenannten aktiven Triangulation führt dies zu einer Vielzahl von Schnittpunkten konzentrischer Kreise um die Radarsensoren, deren Radien den gemessenen Abständen entsprechen. Die tatsächlichen Objektpositionen müssen dann durch Eliminierung der überzähligen Schnittpunkte, beispielsweise durch aufwendige Tracking-Algorithmen, extrahiert werden.

Bei einer sogenannten passiven Triangulation werden die an einem Objekt reflektierten Signale eines aussendenden Sensors von einem benachbarten Sensor wieder empfangen und ausgewertet. Somit ist eine Objektpasitionsbestimmung mit der gleichzeitigen Möglichkeit die Objektkontur zu vermessen, durch Auswertung von Kreuzechos möglich. Die Laufzeit des Signals vom sendenden zum empfangenden Sensor lässt hier die Berechnung einer elliptischen Kurve in der Fahrebene zu, auf welcher sich das Objekt befindet. Zusammen mit den Abständen aus den Direktechos kann dann die Position und ungefähre geometrische Form errechnet werden.

In der nicht vorveröffentlichten DE 100 49 906.6, die zur DE-A-10049906 geführt hat, ist zum Beispiel ein Verfahren beschreiben, mit dem die Kreuzechoauswertung bei Pulsradarsensoren mit Hilfe einer stochastischen Codierung durchgeführt wird. Bei diesem Puls-Echo-Radarsystem wird ein Trägersignal eines Mikrowellensenders pulsförmig mit einer vorgegebenen Pulswiederholrate ausgesendet. Dieses Mikrowellensignal wird an einem Zielobjekt reflektiert und in einer Mischerschaltung wird aus der Zeit vom Aussenden des Pulses und dem Eintreffen der reflektierten Strahlung die Lage des Zielobjekts hergeleitet. In vorteilhafter Weise werden dabei mittels eines zufallsgesteuerten Schalters die Pulse nur mit einer vorgegebenen Wahrscheinlichkeit ausgesendet, wobei dann zur Auswertung der empfangenen Signale die stochastischen Pulsfolgen des Senders beim Empfänger bekannt sind. Durch diese Codierung ist auch hier eine Unterscheidbarkeit mehrere gesendeter Signale möglich.

Alle herkömmlichen Verfahren der passiven Triangulation benötigen eine exakte zeitliche Synchronisation der Einzelsensoren innerhalb einer Gruppe, da sonst die Laufzeiten der Kreuzechos nicht korrekt bestimmt werden können. Insbesondere bei den Verfahren mit einer Codierung müssen die Taktgeneratoren, mit denen die Pulsfolgen in den einzelnen Sensoren erzeugt werden, sehr genau synchron arbeiten. Die erforderliche Genauigkeit leitet sich hierbei aus der zulässigen Toleranz der Distanzmessung von typischerweise 3 cm ab. Wenn der Kreuzechoweg mit dieser Genauigkeit bestimmt werden soll, muss die Laufzeit der elektromagnetischen Welle in Luft mit einer zeitlichen Genauigkeit von ca. 100 ps bestimmt werden können.

Ein synchroner Betrieb räumlich getrennter'Taktgeneratoren mit dieser hohen Genauigkeit ist über einen längeren Zeitraum nur durch Übertragung eines Referenztaktes innerhalb der Sensorgruppe möglich. An die Genauigkeit des Referenztaktes innerhalb einer Sensorgruppe wird dann jedoch eine hohe Anforderungen gestellt. Kritisch ist vor allem die Phasenlage des Taktsignals. Wird beispielsweise ein Taktsignal mit einer Frequenz f_{T} = 5 MHz verwendet, was der Pulswiederholfrequenz von 24 GHz-Radarsensoren entspricht, so genügt bereits eine Winkelabweichung von 0,36° um einen Fehler in der Kreuzechowegmessung von 6 cm hervorzurufen.

Die zuvor beschriebenen Phasenwinkelfehler können ohne weiteres durch eine Reihe von Einflüsse entstehen. Beispielsweise werden bei der Übertragung auf den Verbindungsleitungen die Taktflanken der Pulse, vor allem aus EMV-Gründen (EMV= elektromagnetische Verträglichkeit), verschliffen. Zur Rekonstruktion der Triggerflanken werden Komparatoren eingesetzt, wobei die Komparatorschwelle und damit die Phasenlage des Taktes dann Einflüssen wie Temperatur- und Betriebsspannungsschwankungen sowie Alterungseffekten unterliegt. Die Signallaufzeit innerhalb der Komparatoren und die Schaltgeschwindigkeit eventuell vorhandener weiterer Gatter im Signalpfad des Referenztaktes sind dann ebenfalls temperaturabhängig und unterliegen sogenannten Drifteffekten. Die Steilheit der Taktflanken der Pulse geht außerdem in die Phasenlage des Triggersignals ein und hängt von der Leitungsimpedanz, den Kapazitäten und den Widerständen der beteiligten RC-Netzwerke und ev. anderer Bauelemente ab. Alle diese physikalischen Eigenschaften sind ebenfalls temperaturabhängig und unterliegen Alterungseffekten.

Weiterhin können elektromagnetische Einstrahlungen auf die Taktleitungen Störpegel erzeugen, welche zusätzliche Fehler bei der Rekonstruktion der Triggerflanken verursachen. Zwar ist die Übertragung gegenüber Phasenfehlern robuster je höher die Taktfrequenz gewählt wird, jedoch erfordern die dann erforderlichen Taktfrequenzen im GHz-Bereich relativ teure Bauelemente mit hoher Stromaufnahme und es werden bei hohen Taktfrequenzen aus EMV-Gründen außerdem abgeschirmte Leitungen erforderlich.

Durch eine auch hinsichtlich der Kosten aufwendige optische Übertragung des Taktes mit Lichtwellenleiternkönnen zwar EMV-Probleme vermieden werden, jedoch bleiben Einflüsse durch schwankende Gatterlaufzeiten und Schaltschwellen bei der Wandlung elektrisch/optisch/elektrisch dennoch wirksam. Zur Eliminierung dieser schädlichen Einflüsse müsste ein hoher Aufwand getrieben werden, der erhebliche Materialkosten verursacht.

### Vorteile der Erfindung

Das eingangs erwähnte Verfahren zum Betrieb einer Radarsensoranordnung mit einer Anzahl von benachbarten, weitgehend untereinander synchronisierten Einzelsensoren zur Bestimmung der Position eines Zielobjekts, ist zur Ermöglichung einer sicheren und schnellen Kalibrierung mit den Merkmalen des Hauptanspruchs in vorteilhafter Weise fortgebildet.

Zunächst wird erfindungsgemäß eine Bestimmung möglicher Zielobjektpositionen durch eine sogenannte aktive Triangulation, d.h. Bildung der Kreisschnittpunkte aller Direktechos, durchgeführt. Hierbei wird auf einfache Weise die Laufzeit des von einem Einzelsensor ausgesendeten und vom Zielobjekt zu diesem Einzelsensor reflektierten Radarsignals jeweils als Direktecho ausgewertet. Abhängig davon, wie viele Einzelsensoren ein Zielobjekt gleichzeitig detektieren, ergibt sich dann eine mehr oder weniger genau bestimmte wahrscheinliche Objektposition in der Detektionsebene.

Im selben Messzyklus wird dann die Laufzeit des von einem Einzelsensor ausgesendeten und vom Zielobjekt zu einem jeweils anderen Einzelsensor reflektierten Radarsignals jeweils als Kreuzecho ausgewertet, wodurch die Redundanz der Messungen weiter erhöht wird. Bei hoher Redundanz kann dann in vorteilhafter Weise auf die Form und Lage der Zielobjekte in der Ebene geschlossen werden, zum Beispiel bei einer Anwendung in einem Kraftfahrzeug ein Pfahl oder eine Wand.

In jeweils einem Messzyklus kann dann aus der Auswertung der Direkt- und der Kreuzechos zumindest die Lage und gegebenenfalls auch die Form des Zielobjekts bestimmt werden. Weiterhin wird erfindungemäß ein Detektionsgütesignal ermittelt und nach Erreichen eines vorgegebenen Betrags des Detektionsgütesignals bei einem bestimmten Zielobjekt kann dann eine Kalibrierung durchgeführt werden. Aus der Abweichung der aus den Direktechos ermittelten Position und der aus den Kreuzechos ermittelten Position des Zielobjekts wird daraufhin eine Korrekturgröße für die Kreuzechos ermittelt.

Vorteilhaft ist es insbesondere wenn die Verfolgung der Reflexpositionen des Zielobjekts über mehrere Messzyklen hinweg erfolgt und eine Eliminierung von sogenannten unplausiblen Reflexen mit Hilfe eines sog. Bewegungsmodellgestützten Verfahrens oder durch Ausnutzung der Redundanz bei gleichzeitiger Detektion mit drei oder mehr Einzelsensoren durchgeführt wird.

Die Bewertung der Detektionssignalgüte für jede gefundene Objektposition eines Ziels mit einer Qualitätszahl Q, welche die Sicherheit ausdrückt, mit der die Position eines Objektes in der Ebene bestimmt wurde, ist in der Regel abhängig von der Signalgüte, der Anzahl der beteiligten Einzelsensoren und auch von der Stabilität der Positionserfassung über mehrere Messzyklen hinweg. Während des Betriebes der Sensoranordnung wird es immer wieder Zielobjekte geben, die sehr starke und stabile Radarreflexe erzeugen, welche zu einer hohen Qualitätszahl Q bei der Positionsbestimmung führen. Immer wenn ein solches Zielobjekt detektiert wird, können die erfindungsgemäßen Kalibrierungsschritte für die Kreuzechoauswertung durchgeführt werden.

In vorteilhafter Weise kann mit einer erfindungemäßen Vorrichtung das zuvor beschrieben Kalibrierungsverfahren ausgeführt werden. Hierzu ist ein Mikrowellenradarsystem als Sensoranordnung mit einem Array aus mehreren Einzelsensoren aufgebaut, deren Detektionsbereiche sich zumindest teilweise überlappen. Die Sensoranordnung ist über ein Bussystem oder Punkt zu Punkt Einzelverbindungen mit einer programmierbaren mikroprozessorgesteuerten Auswerteeinheit sowie mit einem Speicher für die gemessenen und errechneten Daten und zur Speicherung eines entsprechenden Datenverarbeitungsprogramms für die Berechnungs- und Schätzprozeduren verbunden.

Ein solches Datenverarbeitungsprogramm für eine mikroprozessorgesteuerte Datenverarbeitungsanlage kann in vorteilhafter Weise einzelne Programmschritte aufweisen, mit denen die gemessenen und die errechneten Werte für die Direkt- und die Kreuzechos ausgewertet werden und dann die Korrekturgröße errechnet wird. Diese Kalibrierungsschritte laufen im Hintergrund ab und beeinflussen den Ablauf der laufenden Messung nicht. Für das erfindungsgemäße Verfahren ist es dabei lediglich erforderlich, dass die gemessenen Direktecho- und Kreuzechoabstände des Zielobjekts über mehrere Messzyklen hinweg zwischengespeichert und zurückverfolgt werden können.

Das Kalibrierungsverfahren läuft dann, wie nachfolgend beschrieben, ab. Wenn die erste Voraussetzung vorliegt, dass ein Zielobjekt mit hoher Signalgüte Q detektiert worden ist und Kreuzechos in die Positionsbestimmung mit eingegangen sind, wird geprüft, ob die Objektposition auch allein aus den Direktechos der vergangenen Messzyklen ohne Verwendung der Kreuzechos genau bestimmt werden kann. Falls dies Bedingung nicht erfüllt ist erfolgt ein Abbruch des Kalibrierungsverfahrens und eine Fortsetzung des normalen Messbetriebs. Wenn die Bedingung allerdings erfüllt ist folgt ein Vergleich der allein aus den Direktechos bestimmbaren Position mit der aus Direkt- und Kreuzechos bestimmten Position. Falls eine Differenz besteht, werden mit einem herkömmlichen Schätzverfahren, z.B. mit einem Kalman-Filter oder einem sogenannten Least-Square-Schätzer, die Messfehler bestimmt, mit denen die Kreuzechos behaftet waren. Aus den Messfehlern werden dann die Korrekturgrößen abgeleitet, mit denen alle folgenden Kreuzechomessungen korrigiert werden.

Das erfindungsgemäße Verfahren führt somit im Betrieb sukzessive zu einer Optimierung der Messgenauigkeit bei der Erfassung des Zielobjekts und kann die Einflüsse langsam veränderlicher Größen wie eine Temperaturdrift und die Alterung der Bauteile auf die Genauigkeit der in der Beschreibungseinleitung erwähnten Referenztaktübertragung für die Einzelsensoren kompensieren.

Bei einer vorteilhaften Ausführungsform des erfindungsgemäßen Verfahrens lässt sich darüber hinaus auch eine Grundeinstellung der Phase des Referenztaktes der gesamten Sensoranordnung mit den Einzelsensoren nach einer. Installation eines neuen Radarsystems, beispielsweise an einem Kraftfahrzeug, durchführen. Dazu wird lediglich ein reflexionsarmer Raum oder eine Freifläche ohne zufällig detektierbare Objekte und ein wohldefiniertes, als punktförmig anzusehendes Referenzobjekt, z.B. ein Radartripelspiegel, benötigt.

Diese Grundkalibrierung kann dann wie folgt ablaufen. Das Referenzzielobjekt wird in einer Position fixiert, in der es von mehreren Einzelsensoren gleichzeitig detektierbar ist, so dass der Grundkalibrierungsmodus gestartet werden kann. Zur Objektpositionsbestimmung werden zunächst nur die Direktechos ausgewertet und aus den Direktechos wird die exakte Position des Referenzzielobjekts bestimmt. Anschließend kann aus der Objektposition die theoretische Laufzeit der Kreuzechos errechnet werden und es wird dann die tatsächliche Laufzeit der Kreuzechos mit allen Ungenauigkeiten bzw. Offsets gemessen.

Aus den Differenzen zwischen den theoretischen und tatsächlichen Laufzeiten werden dann die Korrekturgrößen gebildet, die allen folgenden Kreuzechomessungen zugrunde gelegt werden. Dieser Ablauf kann mit verschiedenen Objektpositionen so oft wiederholt werden, bis alle möglichen Kreuzechowege abgearbeitet wurden.

Zusammenfassend lässt sich feststellen, dass mit der Erfindung auf einfache Weise ein modellbasiertes Verfahren zur Kompensation von Hardwaretoleranzen in einer Radarsensoranordnung mit mehreren Einzelsensoren geschaffen ist, das bei einer Auswertung mit sogenannten Triangulationsverfahren die Phasenfehler in der Referenztaktübertragung korrigiert und damit eine hohe Genauigkeit der Kreuzechowegbestimmung trotz eventuell vorhandener Ungenauigkeiten im Referenztakt ermöglicht.

Es ist eine automatische Kalibrierung der Kreuzechoauswertung dieser Radarsensorgruppen per Software im Sensorsteuer- bzw. Auswertegerät möglich. Weiterhin ist eine einfach durchzuführende Grundkalibrierung am Ende des Herstellungsprozesses der Sensoranordnung, beispielsweise an einem Kraftfahrzeug, durch Abtasten eines Referenzzielobjekts möglich. Eine ebenfalls leicht durchzuführende ständige automatische Feinkalibrierung mit Hilfe starker Radarreflexe während des Betriebes gleicht verfälschende Temperatureinflüsse und sonstige Drift aus, so dass während der Lebensdauer der Sensoranordnung keinerlei manuelle Justage oder Wartung nötig ist, um die Genauigkeit der Kreuzechowegmessung aufrecht zu erhalten. Es ist, wie schon erwähnt, kein hochgenauer Referenztakt zur Synchronisierung der Einzelsensoren erforderlich, so dass eine kostengünstige Lösung mit wenig Hardwareaufwand ausreicht.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

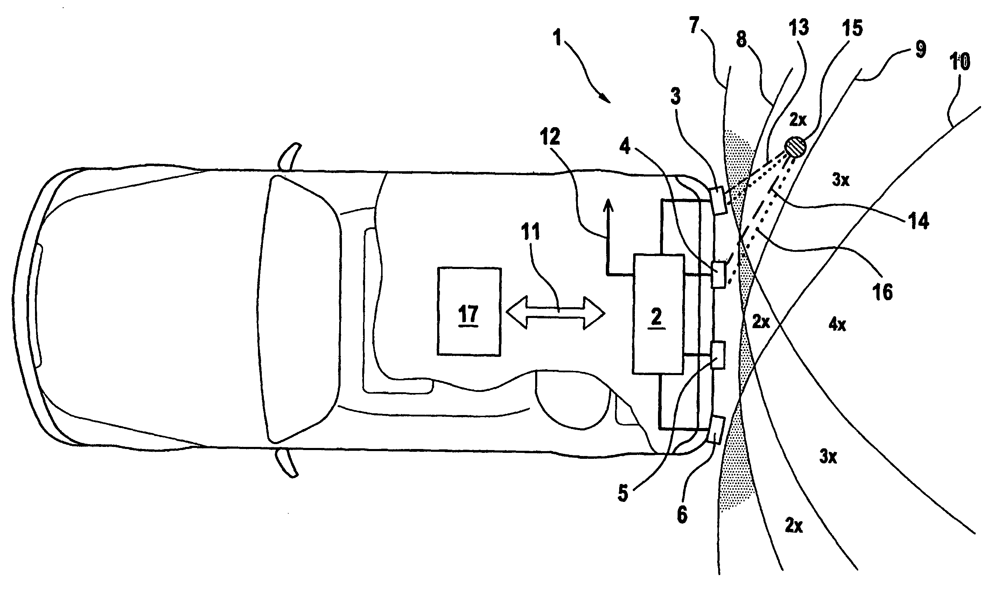

Die erfindungemäße Sensoranordnung wird anhand eines vorteilhaften Ausführungsbeispiels in der Zeichnung erläutert, wobei
die einzige Figur ein schematisiertes Bild einer Gruppe von vier Einzelsensoren einer Radarsensoranordnung, deren Detektionsbereiche sich überlappen, zeigt.

### Beschreibung des Ausführungsbeispiels

In der Figur ist ein Blockschaltbild einer Sensoranordnung 1 mit einer Sende- und Empfangsbaugruppe 2 eines Mikrowellenradarsystems dargestellt. Die hier nicht näher erläuterte Sende- und Empfangsbaugruppe 2 ist mit vier Einzelsensoren 3, 4, 5, und 6 versehen, die sich teilweise überlappende Detektionsbereiche 7, 8 9, und 10 haben.

Die Sensoranordnung 1 ist hier über ein Bussystem 11, z.B. einen CAN-Bus, an eine nicht weiter beschriebene, herkömmliche mikroprozessorgesteuerte Steuer- und Auswerteeinheit 17 angeschlossen und weist darüber hinaus noch einen Anschluss 12 für eine Energieversorgung auf.

Die Einzelsensoren 3, 4, 5 und 6 weisen in an sich bekannter Weise einen Sendeoszillator für das Trägersignal, z.B. mit einer Frequenz von 24 GHz, zur Aussendung eines beispielsweise gepulsten oder mit anderen Verfahren, z.B. BPSK oder p/n, modulierten Radarsignals auf und detektieren an einem Empfängereingang das von einem, in mindestens einem Detektionsbereich 7 bis 10 liegenden Zielobjekt reflektierte Empfangssignal. Das empfangene Signal wird auf einen Mischer geführt, wobei an diesem Mischer außerdem das Trägersignal des Sendeoszillators anliegt.

Da das am Zielobjekt reflektierte und am jeweiligen Eingang des sendenden Einzelsensors 3 bis 6 empfangene Signal (Direktecho) eine durch die Entfernung des Zielobjekts bestimmte Laufzeit zwischen dem Aussenden und dem Empfang aufweist, kann durch die Mischung ein entfernungsabhängiges Signal gewonnen und der Abstand des Zielobjekts bestimmt werden. In der Figur ist beim Einzelsensor 3 ein solches Direktecho 13 und beim Einzelsensor 4 ein Direktecho 14 eines Zielobjekts 15 beispielhaft eingezeichnet. Im selben Messzyklus kann auch die Laufzeit des von einem der Einzelsensoren 3 bis 6 ausgesendeten und vom Zielobjekt (z.B. 15) zu einem jeweils anderen der Einzelsensoren 3 bis 6 reflektierten Radarsignals jeweils als Kreuzecho ausgewertet werden, wodurch auf die Form und Lage der Zielobjekte in der Detektionsebene 7 bis 10 geschlossen werden kann, zum Beispiel bei einer Anwendung in einem Kraftfahrzeug auf einen Pfahl oder eine Wand. Zur Verdeutlichung ist hier auszugsweise ein Kreuzecho 16 des vom Einzelsensor 3 ausgesendeten und vom Einzelsensor 4 empfangenen Reflexsignals des Zielobjekts 15 als punktierte Linie gezeigt.

Aus den Detektionsbereichen 7 bis 10 ist erkennbar, dass in den gestrichelt gezeichneten Bereichen ein Zielobjekt nur von einem Einzelsensor 3 bis 6 zur Abstandsmessung erfasst werden würde und somit dieser Bereich für eine genau Auswertung nicht zur Verfügung steht. In den anderen sich überlappenden Bereichen sind eventuelle Zielobjekte mit der Anzahl ihrer Erfassungsmöglichkeiten von den Einzelsensoren 3 bis 4, nämlich 2x, 3x oder 4x, eingezeichnet. Mit dieser Mehrfacherfassung ist somit mit einem sogenannten Triangulationsverfahren auch die laterale Erfassung und somit auch eine zweidimensionale Positionsbestimmung und ev. sogar die Bestimmung der Form des Zielobjekts möglich.

Mit der Sensoranordnung 1 nach dem Ausführungsbeispiel ist eine automatische Kalibrierung der synchronisierten Einzelsensoren 3 bis 6 und eine Grundkalibrierung möglich. Die Bestimmung möglicher Zielobjektpositionen erfolgt zunächst durch aktive Triangulation, d.h. Bildung der Kreisschnittpunkte aller Direktechos. In Abhängigkeit von der Anzahl der Einzelsensoren 3 bis 6, die gleichzeitig das Zielobjekt detektieren, ergibt sich eine mehr oder weniger genau bestimmte wahrscheinliche Objektposition in den Detektionsbereichen 7 bis 10 nach der Figur.

Anschließend erfolgt, wie anhand der vorhergehenden Erfindungsbeschreibung ausführlich dargelegt, die Auswertung der Kreuzechos, so dass bei hoher Redundanz der Messungen auf die Form und Lage der Zielobjekte in der Ebene der Detektionsbereiche geschlossen werden kann. Immer wenn ein Zielobjekt mit einem ausreichenden Detektionsgütesignal Q gefunden wurde, welches die Sicherheit ausdrückt, mit der die Position des Zielobjektes in der Ebene bestimmt wurde, wird das erfindungsgemäße Kalibrierungsverfahren gestartet. Diese Zielobjekte werden beispielsweise vierfach (4x) detektiert und erzeugen ausreichend starke und stabile Radarreflexe, welche dann zu einem hohen Detektionsgütesignal Q führen.

Wenn dann auch aus den Direktechos der vergangenen Messzyklen ohne Verwendung der Kreuzechos die Position, beispielsweise des Zielobjekts 15, genau bestimmt werden kann, folgt ein Vergleich der allein aus den Direktechos 13, 14 bestimmbaren Position 15 mit der aus Direkt- und Kreuzechos 13, 14 und 16 bestimmten Position. Falls eine Differenz besteht, werden mit einem herkömmlichen Schätzverfahren die Messfehler bestimmt, mit denen die Kreuzechos 16 etc. behaftet waren. Aus den Messfehlern werden dann die Korrekturgrößen abgeleitet, mit denen alle folgenden Kreuzechomessungen korrigiert werden.

## Patentansprüche

1. Verfahren zum Betrieb einer Radarsensoranordnung mit einer Anzahl von benachbarten, weitgehend untereinander synchronisierten Einzelsensoren (3, 4, 5, 6) zur Bestimmung der Position eines Zielobjekts (15), bei dem
- in einem Messzyklus die Laufzeit des von einem Einzelsensor ausgesendeten und vom Zielobjekt zu diesem Einzelsensor (3, 4, 5, 6) reflektierten Radarsignals jeweils als Direktecho (13, 14) ausgewertet wird,
- im selben Messzyklus die Laufzeit des von einem Einzeisensor (3, 4, 5, 6) ausgesendeten und vom Zielobjekt (15) zu einem jeweils anderen Einzelsensor (3, 4, 5, 6) reflektierten Radarsignals jeweils als Kreuzecho (16) ausgewertet wird,
**gekennzeichnet durch** folgende Merkmale:
- aus der Auswertung der Direkt- und der Kreuzechos (13, 14, 16) wird zumindest die Lage des Zielobjekts (15) bestimmt und ein Detektionsgütesignal (Q) ermittelt,
- nach Erreichen eines vorgegebenen Betrags des Detektionsgütesignals (Q) wird bei einem Zielobjekt (15) eine Kalibrierung **dadurch** durchgeführt, dass aus der Abweichung der aus den Direktechos (13, 14) ermittelten Position und der aus den Kreuzechos (16) ermittelten Position des Zielobjekts (15) eine Korrekturgröße für die Kreuzechos (16) ermittelt wird.

2. Verfahren nach Anspruch 1, **dadurch gekennzeichnet, dass**
- die Auswertung der Direkt- und der Kreuzechos (13,14, 16) über mehrere Messzyklen erfolgt und die jeweiligen Werte zwischengespeichert werden und dass
- nichtplausible Positionen von Zielobjekten (15) durch einen Vergleich mit einem Bewegungsmodell oder durch Ausnutzung der Redundanz der Vielzahl der Messungen ausgeschlossen werden.

3. Verfahren nach Anspruch 1 oder 2, **dadurch gekennzeichnet, dass**
- das Detektionsgütesignal (Q) aus der Signalgüte der empfangenen Direkt- und Kreuzechos (13, 14, 16), der Anzahl der an der Positionsbestimmung durch Kreuzechos (16) beteiligten Einzelsensoren (3, 4, 5, 6) und/oder aus der Stabilität der Positionsbestimmung über mehrere Messzyklen hinweg ermittelt wird.

4. Verfahren nach einem der vorhergehenden Ansprüche, **dadurch gekennzeichnet, dass**
- beim Erreichen des vorgegebenen Detektionsgütesignals (Q) geprüft wird ob die Position des Zielobjekts (15) allein aus den Direktechos (13,14) der vorher durchgeführten Messzyklen bestimmt werden kann und nur bei Vorliegen dieser Bedingung die Kalibrierung durchgeführt wird.

5. Verfahren nach einem der vorhergehenden Ansprüche, **dadurch gekennzeichnet, dass**
- aus der Abweichung der aus den Direktechos (13,14) ermittelten Position und der aus den Kreuzechos (16) ermittelten Position des Zielobjekts (15) mit einem Schätzverfahren der jeweilige Messfehler bestimmt wird, aus dem die Korrekturgröße abgeleitet wird mit der alle nachfolgenden Messwerte der Kreuzechos (16) korrigiert werden.

6. Verfahren nach einem der vorhergehenden Ansprüche, **dadurch gekennzeichnet, dass**
- eine Grundkalibrierung der Radarsensoranordnung (1) mit folgenden Verfahrensschritten durchgeführt wird:
- es wird ein Referenzzielobjekt so angeordnet, dass es von mehreren Einzelsensoren (3,4,5,6) gleichzeitig detektiert werden kann,
- mit einer Messung der Direktechos (13,14) aller Einzelsensoren wird die Position des Referenzzielobjekts bestimmt,
- aus der so gemessenen Position des Referenzzielobjekts wird die theoretische Laufzeit der zu erwartenden Kreuzechos (16) berechnet,
- es wird die tatsächliche Laufzeit der erfassbaren Kreuzechos (16) gemessen,
- aus der Abweichung der theoretischen und der tatsächlichen Laufzeit wird die Korrekturgröße gebildet, die allen folgenden Kreuzechomessungen zu Grunde gelegt wird.

7. Verfahren nach Anspruch 6, **dadurch gekennzeichnet, dass**
- die Verfahrensschritte mit unterschiedlichen Positionen des Referenzzielobjekts so oft wiederholt werden, bis alle möglichen Kreuzechos (16) der beteiligten Einzelsensoren (3, 4, 5, 6) korrigiert sind.

8. Vorrichtung umfassend
- ein Mikrowellenradarsystem, das als Sensoranordnung (1) mit einem Array aus mehreren Einzelsensoren (3, 4, 5, 6) aufgebaut ist, deren Detektionsbereiche (7, 8, 9, 10) sich zumindest teilweise überlappen, wobei
- die Sensoranordnung (1) über ein Bussystem (11) oder über eine Punkt zu Punkt Verbindung der Einzelsensoren (3, 4, 5, 6) mit einer programmierbaren mikroprozessorgesteuerten Datenverarbeitungsanlage bestehend aus einer Auswerte- und Steuereinheit (17) und mit einem Speicher für die gemessenen und errechneten Daten sowie ein Datenverarbeitungsprogramm verbunden ist, **dadurch gekennzeichnet, dass** die Vorrichtung im Betrieb das Verfahren nach einem der vorhergehenden Ansprüche durchführt.

9. Datenverarbeitungsprogramm, das Verfahren nach einem der vorhergehenden Ansprüche durchführt, wenn es von der mikroprozessorgesteuerten Datenverarbeitungsanlage nach Anspruch 8 ausgeführt wird wobei
- mit den einzelnen Programmschritten die gemessenen und die errechneten Werte für die Direkt- und die Kreuzechos (13,14,16) ausgewertet werden und die Korrekturgröße errechnet wird.

## Claims

1. Method for operation of a radar sensor arrangement having a number of adjacent individual sensors (3, 4, 5, 6), which are largely synchronized to one another, in order to determine the position of a target object (15), in which
- the delay time of the radar signal which is being transmitted from an individual sensor and has been reflected from the target object to this individual sensor (3, 4, 5, 6) is in each case evaluated as a direct echo (13, 14) in one measurement cycle,
- the delay time of the radar signal which is being transmitted from one individual sensor (3, 4, 5, 6) and has been reflected from the target object (15) to a different individual sensor (3, 4, 5, 6) in each case is in each case evaluated as a cross-echo (16) in the same measurement cycle,
**characterized by** the following features:
- at least the position of the target object (15) and a detection quality signal (Q) are determined from the evaluation of the direct and cross-echoes (13, 14, 16),
- once the detection quality signal (Q) reaches a predetermined magnitude, a calibration for a target object (15) is carried out by determining a correction variable for the cross-echoes (16) from the difference between the position of the target object (15) as determined from the direct echoes (13, 14) and the position of the target object (15) as determined from the cross-echoes (16).

2. Method according to Claim 1, **characterized in that**
- the direct and cross-echoes (13, 14, 16) are evaluated over two or more measurement cycles, and the respective values are temporarily stored, and **in that**
- implausible positions of target objects (15) are excluded by comparison with a movement model or by use of the redundancy of the large number of measurements.

3. Method according to Claim 1 or 2, **characterized in that**
- the detection quality signal (Q) is determined from the signal quality of the received direct and cross-echoes (13, 14, 16), from the number of individual sensors (3, 4, 5, 6) involved in position determination by means of cross-echoes (16), and/or from the stability of the position as determined over two or more measurement cycles.

4. Method according to one of the preceding claims, **characterized in that**
- on reaching the predetermined detection quality signal (Q), a check is carried out to determine whether the position of the target object (15) can be determined solely from the direct echoes (13, 14) from the measurement cycles which have already been carried out, and the calibration is carried out only when this condition is satisfied.

5. Method according to one of the preceding claims, **characterized in that**
- the respective measurement error is determined by means of an estimation method from the difference between the position of the target object (15) as determined from the direct echoes (13, 14) and the position of the target object (15) as determined from the cross-echoes (16), and this measurement error is used to derive the correction variable which is used to correct all of the subsequent measured values of the cross-echoes (16).

6. Method according to one of the preceding claims, **characterized in that**
- a basic calibration of the radar sensor arrangement (1) is carried out with the following method steps:
- a reference target object is arranged such that it can be detected at the same time by two or more individual sensors (3, 4, 5, 6),
- the position of the reference target object is determined by a measurement of the direct echoes (13, 14) from all the individual sensors,
- the theoretical delay time of the cross-echoes (16) to be expected is calculated from the position of the reference target object as measured in this way,
- the actual delay time of the detectable cross-echoes (16) is measured,
- the correction variable, which is used as the basis for all subsequent cross-echo measurements, is formed from the difference between the theoretical delay time and the actual delay time.

7. Method according to Claim 6, **characterized in that**
- the method steps are repeated using different positions of the reference target object until all the possible cross-echoes (16) of the individual sensors (3, 4, 5, 6) involved have been corrected.

8. Apparatus comprising
- a microwave radar system which is in the form of a sensor arrangement (1) with an array comprising two or more individual sensors (3, 4, 5, 6), whose detection areas (7, 8, 9, 10) at least partially overlap, with
- the sensor arrangement (1) being connected via a bus system (11) or via a point-to-point connection between the individual sensors (3, 4, 5, 6) to a programmable microprocessor-controlled data processing system comprising an evaluation and control unit (17) and to a memory for the measured and calculated data, as well as a data processing program, **characterized in that** the apparatus carries out the method according to one of the preceding claims during operation.

9. Data processing program, which carries out the method according to one of the preceding claims when it is run by the microprocessor-controlled data processing system according to Claim 8, with
- the measured and the calculated values for the direct and cross-echoes (13, 14, 16) being evaluated, and the correction variable calculated, by means of the individual program steps.

## Revendications

1. Procédé de fonctionnement d'un ensemble de capteurs radar comportant une pluralité de capteurs individuels (3, 4, 5, 6) voisins, largement synchronisés les uns avec les autres, pour la détermination de la position d'un objet cible (15), selon lequel
- dans un cycle de mesure, la durée du signal radar émis par un capteur individuel et réfléchi par l'objet cible vers ce capteur individuel (3, 4, 5, 6) est exploité chaque fois comme écho direct (13, 14),
- dans le même cycle de mesure, la durée du signal radar émis par un capteur individuel (3, 4, 5, 6) et réfléchi par l'objet cible (15) vers chaque fois un autre capteur individuel (3, 4, 5, 6) est exploitée comme écho croisé (16),
**caractérisé par**
les caractéristiques suivantes :
- à partir de l'exploitation de l'écho direct et de l'écho croisé (13, 14, 16), on détermine au moins l'emplacement de l'objet cible (15) et on calcule un signal de qualité de détection (Q),
- dès l'obtention d'un montant prédéterminé du signal de qualité de détection (Q), on effectue un étalonnage est réalisé sur un objet cible (15), en calculant à partir de l'écart de la position déterminée d'après l'écho direct (13, 14) et à partir de la position de l'objet cible (15) calculée d'après l'écho croisé (16), une grandeur de correction de l'écho croisé (16).

2. Procédé selon la revendication 1,
**caractérisé en ce que**
- l'exploitation de l'écho direct et de l'écho croisé (13, 14, 16) est effectuée sur plusieurs cycles de mesure et les valeurs respectives sont enregistrées de façon intermédiaire, et
- les positions non plausibles de l'objet cible (15) sont exclues par une comparaison avec un modèle de mouvement ou par utilisation de la redondance de la pluralité des mesures.

3. Procédé selon la revendication 1 ou 2,
**caractérisé en ce que**
- le signal de qualité de détection (Q) est calculé à partir de la qualité du signal des échos direct et croisé (13, 14, 16) reçus, de la quantité des capteurs individuels (3, 4, 5, 6) participant à la détermination de la position par échos croisés (16) et/ou de la stabilité de la détermination de la position sur plusieurs cycles de mesure.

4. Procédé selon l'une des revendications précédentes,
**caractérisé en ce que**
dès l'obtention du signal prédéterminé de qualité de détection (Q), une vérification est faite pour voir si la position de l'objet cible (15) peut être déterminée seulement à partir des échos directs (13, 14) des cycles de mesure effectués précédemment, et l'étalonnage est effectué seulement si cette condition est remplie.

5. Procédé selon l'une des revendications précédentes,
**caractérisé en ce que**
à partir de l'écart de la position calculée d'après les échos directs (13, 14) et de la position de l'objet cible (15) calculée d'après l'écho croisé (16), un procédé d'estimation détermine l'erreur de mesure respective dont est déduite la grandeur de correction avec laquelle toutes les valeurs de mesure suivantes des échos croisés (16) sont corrigées.

6. Procédé selon l'une des revendications précédentes,
**caractérisé en ce qu'**
on effectue un étalonnage de base de l'ensemble de capteurs radar (1) comportant les étapes suivantes est effectué :
- on installe un objet cible de référence pour pouvoir le détecter simultanément par plusieurs capteurs individuels (3, 4, 5, 6),
- la position de l'objet cible de référence est déterminée par une mesure des échos directs (13, 14) de tous les capteurs individuels,
- à partir de la position ainsi mesurée de l'objet cible de référence, on calcule la durée théorique des échos croisés (16) à prévoir,
- la durée réelle des échos croisés (16) détectables est mesurée,
- à partir de l'écart de la durée théorique et de la durée réelle on calcule la grandeur de correction qui sera prise comme base pour toutes les mesures suivantes des échos croisés.

7. Procédé selon la revendication 6,
**caractérisé en ce que**
- les étapes du procédé sont répétées avec les différentes positions de l'objet cible de référence jusqu'à ce que tous les échos croisés (16) possibles des capteurs individuels (3, 4, 5, 6) intéressés soient corrigés.

8. Dispositif comprenant
- un système radar à micro-ondes, structuré comme ensemble de capteurs (1) comportant un arrangement constitué de plusieurs capteurs individuels (3, 4, 5, 6), dont les zones de détection (7, 8, 9, 10) se recouvrent au moins en partie, dans lequel
- l'ensemble de capteurs (1) est relié, par un système de bus (11) ou par une liaison point à point des capteurs individuels (3, 4, 5, 6), avec une installation de traitement des données programmable, commandée par microprocesseur, constituée d'une unité d'exploitation et de commande (17), et avec une mémoire pour les données mesurées et calculées ainsi que pour un programme de traitement des données,
**caractérisé en ce que**
le dispositif en service exécute le procédé selon l'une quelconque des revendications précédentes.

9. Programme de traitement des données qui exécute le procédé selon l'une quelconque des revendications précédentes lorsqu'il est exécuté par l'installation de traitement des données commandée par microprocesseur selon la revendication 8, et
- par les étapes respectives du programme, on exploite les valeurs mesurées et les valeurs calculées pour les échos directs et les échos croisés (13, 14, 16), et on calcule la grandeur de correction.
